# EUROPÄISCHE PATENTSCHRIFT

(11) **EP 0 745 469 B1**
(45) Veröffentlichungstag und Bekanntmachung des Hinweises auf die Patenterteilung: **28.07.1999**
(21) Anmeldenummer: 96105398.0
(22) Anmeldetag: 04.04.1996
(51) Int. Cl.: B29C 45/40, B29C 45/44, B29C 33/44

(54) **Vorrichtung zur Herstellung eines rotationssymmetrischen Formteils**
Apparatus for manufacturing a rotationally symmetrical moulded element
Dispositif pour la fabrication d'un élément moulé ayant une symétrie de rotation

(30) Priorität: 31.05.1995 DE 19519873
(43) Veröffentlichungstag der Anmeldung: 04.12.1996
(73) Patentinhaber: ROBERT BOSCH GMBH, 70442 Stuttgart (DE)
(72) Erfinder: Eigen, Ulrich, Dipl.-Ing., 71554 Weissach (DE); Egert, Dieter, Dipl.-Ing., 71404 Korb (DE)

(56) Entgegenhaltungen:
- DE-A- 2 026 456
- FR-A- 2 160 790
- GB-A- 2 292 190
- NL-A- 6 806 896
- US-A- 1 689 579
- US-A- 2 464 051
- US-A- 3 150 222
- PATENT ABSTRACTS OF JAPAN vol. 010, no. 368 (M-543), 9.Dezember 1986 & JP-A-61 162313 (KIYOSHI YAMADA), 23.Juli 1986,
- PATENT ABSTRACTS OF JAPAN vol. 007, no. 024 (M-189), 29.Januar 1983 & JP-A-57 178715 (KYOKUTO KIKAI SEISAKUSHO KK), 4.November 1982,

## Beschreibung

### Stand der Technik

Die Erfindung geht aus von einer Vorrichtung zur Herstellung eines rotationssymmetrischen Formteils, insbesondere eines Flügelrades einer Strömungspumpe nach der Gattung des Hauptanspruchs.

Es wurde bereits ein Flügelrad für eine Strömungspumpe vorgeschlagen, bei dem an den beiden axial gerichteten Stirnseiten jeweils ein Kranz mit Flügeln angeordnet ist, zwischen denen jeweils Zwischenräume vorhanden sind, die mit einem den Flügeln zugeordneten Förderkanal zum Fördern eines Fluids zusammenwirken. Die Flügel der beiden Kränze sind bei Betrachtung in radialer Richtung bezüglich der Drehachse des Flügelrads schräggestellt angeordnet, so daß die Flügel des jeweiligen Kranzes zur Stirnseite des Flügelrads hin in Umlaufrichtung des Flügelrads vorauseilen.

Zur Herstellung derartiger Flügelräder aus Kunststoff werden Spritzgußwerkzeuge verwendet, die mindestens zwei Werkzeugteile mit einer entsprechenden Formteiltrennebene aufweisen. Bei Formteilen mit schräg zur Achsrichtung verlaufenden Hohlräumen, wie es bei den Flügelrädern durch die schrägverlaufenden Zwischenräume vorliegt, ist eine spezielle Vorrichtung notwendig, die das Entformen der Formteile ermöglicht. Dazu ist entweder vorgesehen, die schräg verlaufende Hohlräume durch einen im entsprechenden Werkzeugteil angeordneten schräg verlaufenden und beweglich angeordneten Kern auszubilden, der vor dem Entformen aus dem Formteil gezogen wird. Eine andere bekannte Ausführung besteht darin, daß das entsprechende Werkzeugteil bei seiner Trennung in axiale Richtung zusätzlich eine entsprechende radiale Bewegung erfährt, so daß die mit dem Werkzeugteil verbundenen Kerne aus den Hohlräumen herausgeschwenkt werden.

Aus der US-PS 3 150 222 ist eine Vorrichtung zum Spritzgießen eines rotationssymmetrischen Formteils bekannt, bei der beim Entformen des Formteils eine Drehbewegung auf das Formteil induziert wird, die dieses von einem mit einem Gewinde versehenen Formkern zumindest teilweise schraubt. Die Drehbewegung wird dabei durch an der äußeren Mantelfläche vorgesehenen Rippen, die mit im Werkzeugteil eingearbeiteten Rillen zusammen wirken, erzeugt. Die Entformung von Hohlräumen durch Formkerne ist nicht vorgesehen. Ebenfalls weist das Formteil keine weiteren nicht rotationssymmetrischen Formpartien auf, die zum Entformen ein weiteres Werkzeugteil erfordern.

### Vorteile der Erfindung

Die erfindungsgemäße Vorrichtung mit den kennzeichnenden Merkmalen des Anspruchs 1 hat den Vorteil, daß eine Selbstentformung bei der Herstellung mit einem Spritzgußwerkzeug möglich ist. Die Vorrichtung kommt ohne drehende Einsätze aus, wodurch nur geringe Herstellungskosten für das Spritzgußwerkzeug entstehen. Durch die einfache Ausführung des Spritzgußwerkzeugs ist die Fertigung des Formteils weniger störanfällig. Ferner kommt das einfache Spritzgußwerkzeug mit kleineren Maschinen aus, so das insgesamt die Investionskosten reduziert werden können. Wichtig zum Funktionieren der Vorrichtung ist, daß die auszubildenden Hohlräume schräg zur Drehachse des Formteils und gegenläufig bezüglich der Formteiltrennebene verlaufen. Die Entformung von nichtrotationssymmetrischen Formpartien wird durch ein drittes Werkzeugteil erreicht, wobei die Entformung der nichtrotationssymmetrischen Formpartien vor der Entformung des Formteils erfolgt.

Mit den in den Unteransprüchen aufgeführten Maßnahmen sind vorteilhafte Weiterbildungen der Vorrichtung möglich. Eine gute Entformbarkeit ist dadurch möglich, wenn die Hohlräume symmetrisch zu einer senkrecht zur Drehachse des Formteils liegenden Symmetrieebene liegen und die Symmetrieebene und die Formteiltrennebene übereinstimmen.

### Zeichnung

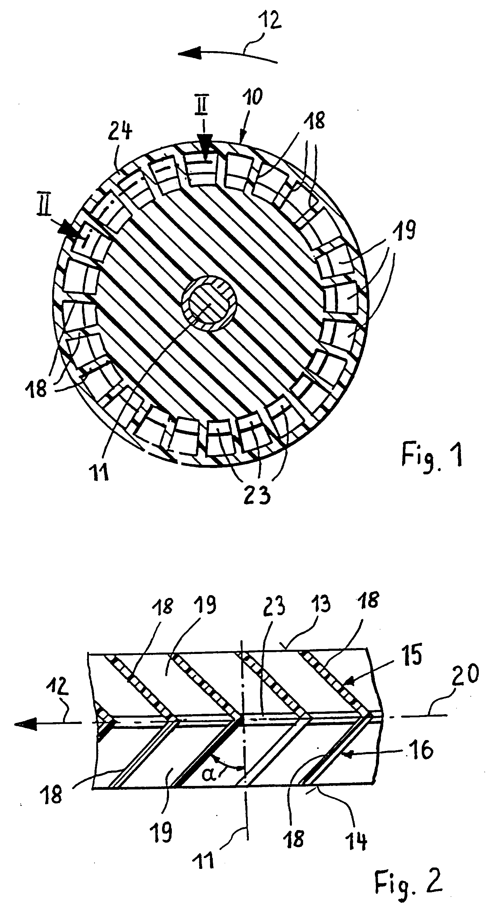

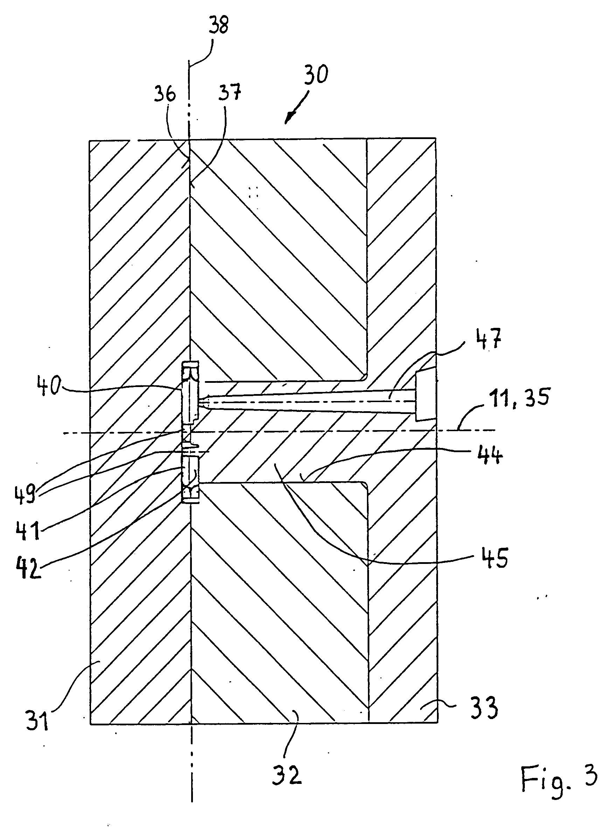

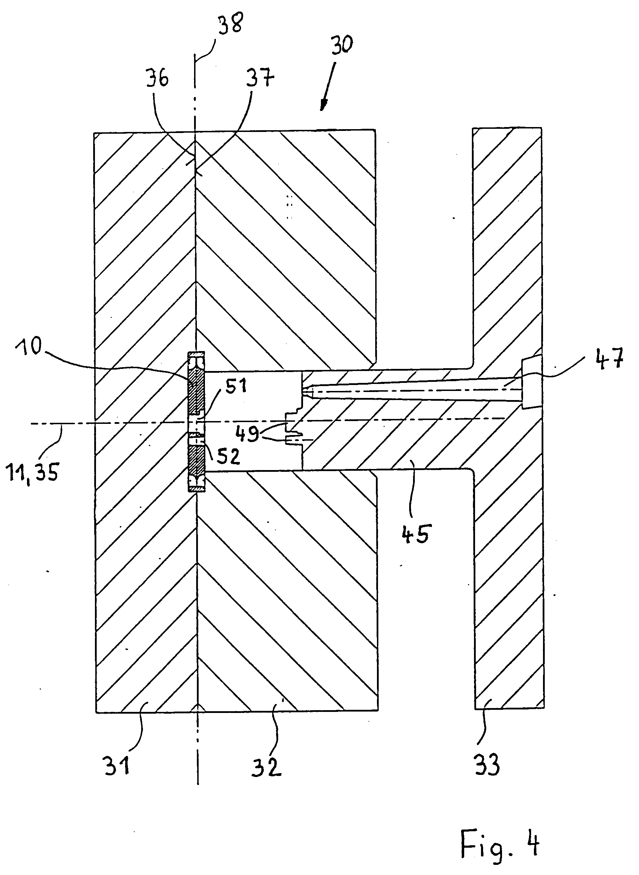

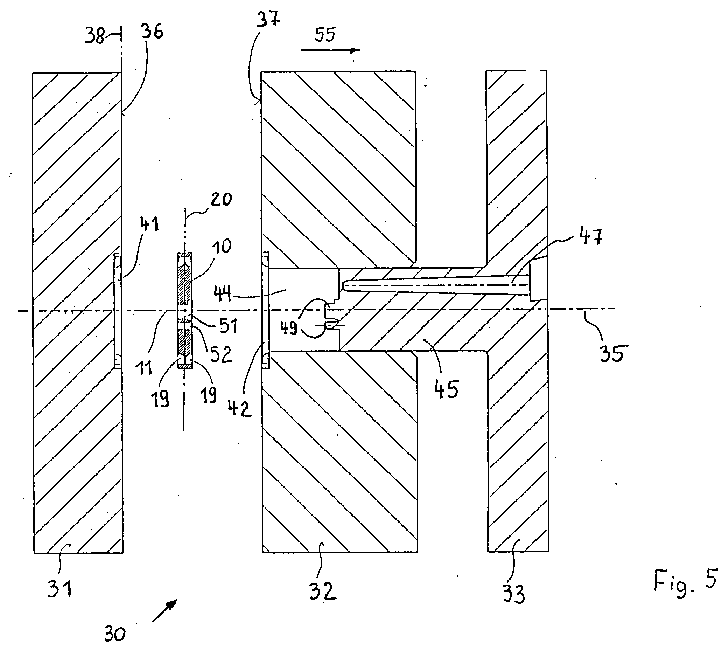

Ein Ausführungsbeispiel der erfindungsgemäßen Vorrichtung ist in der Zeichnung dargestellt und in der nachfolgenden Beschreibung näher erläutert. Es zeigen Figur 1 ein Flügelrad einer Strömungspumpe in einem Querschnitt senkrecht zu dessen Drehachse, Figur 2 das Flügelrad in einem Schnitt entlang der Linie II-II nach Figur 1, Figur 3 eine erfindungsgemäße Vorrichtung zur Erstellung des Flügelrads gemäß Figur 1 in geschlossenem Zustand, Figur 4 die Vorrichtung gemäß Figur 3 in einem ersten Öffnungsschritt und Figur 5 die Vorrichtung gemäß Figur 3 mit entformtem Flügelrad.

### Ausführungsbeispiel

Figur 1 zeigt ein Flügelrad 10 mit einer nicht dargestellten Störungspumpe mit einer Drehachse 11 und einer mit einem Pfeil dargestellten Umlaufrichtung 12. Das Flügelrad 10 ist gemäß Figur 2 mit zwei senkrecht zu seiner Drehachse 11 gerichteten parallelen Stirnseiten 13, 14 ausgeführt. An der Stirnseite 13 weist das Flügelrad 10 einen ersten umlaufenden Flügelkranz 15 und an der anderen Stirnseite 14 einen zweiten Flügelkranz 16 mit jeweils schräg zur Drehachse 11 verlaufenden Flügeln 18 auf. Zwischen den Flügel 18 sind jeweils Zwischenräume 19 vorhanden, die von der einen Stirnseite 13 bis zur anderen Stirnseite 14 reichen.

Die Flügelkränze 15, 16 sind inbezug auf eine rechtwinklig zur Drehachse 11 verlaufenden Ebene 20 symmetrisch ausgebildet. Die Schrägstellung der Flügel 18 ist so ausgeführt, daß die Flügel 18 zur jeweiligen Stirnseite 13, 14 hin in Umlaufrichtung 12 vorauseilen, wobei die Flügel 18 mit der Drehachse 11 einen in Umlaufrichtung 12 gerichteten Winkel α von beispielsweise 25° bis 50° einschließen. Ein zum Entformen des Flügelrads 10 aus einem Spritzgußwerkzeug besonders geeigneter Winkel α liegt bei 30°. Die in die Zwischenräume 19 weisenden Flächen der Flügel 18 sind im wesentlichen eben ausgebildet. Das Profil der Flügel 18 ist ferner so ausgeführt, daß die notwendige Entformungskonizität vorliegt.

An dem zur Drehachse 11 weisenden Grund der Zwischenräume 19 ist ebenfalls symmetrisch zur Ebene 20 ein Steg 23 ausgebildet. Der Steg 23 verläuft zu den beiden Stirnseiten 13,14 hin jeweils mit einer gerundeten Grundfläche, beispielsweise in Form eines Kreisabschnitts. An ihren äußeren Enden sind die Flügel 18 durch einen geschlossenen Ring 24 miteinander verbunden.

Das beschriebene Flügelrad 10 wird mit einem in den Figuren 3 bis 5 dargestellten Spritzgußwerkzeug 30 hergestellt. Das Spritzgußwerkzeug 30 besteht im wesentlichen aus einem ersten Werkzeugteil 31, einem zweiten Werkzeugteil 32 und einem dritten Werkzeugteil 33. Die Werkzeugteile 31 und 32 sind jeweils auf einer Achse 35 axial verschiebbar angeordnet, wobei die Achse 35 mit der Drehachse 11 des Flügelrads 10 übereinstimmt.

Die beiden Werkzeugteile 31, 32 weisen jeweils zueinander zeigende Stirnflächen 36, 37 auf, die eine Formteiltrennebene 38 ausbilden. Im ersten Werkzeugteil 31 ist eine erste Formhälfte 41 und im zweiten Werkzeugteil 32 eine zweite Formhälfte 42 eingearbeitet. Die erste und die zweite Formhälfte 41, 42 bilden einen Formhohlraum 40. Die Formhälften 41, 42 besitzen nicht näher dargestellte, jeweils mit den Werkzeugteilen 31, 32 starr verbundene Werkzeugpartien, die als Formkerne die Hohlräume 19 des Flügelrades 10 ausbilden.

Das zweite Werkzeugteil 32 weist beispielsweise eine zylindrische Durchführung 44 für ein zylindrisches Ansatzstück 45 des dritten Werkzeugteils 33 auf. Das Werkzeugteil 33 ist mit dem Ansatzstück 45 entlang der Achse 35 axial verschiebbar angeordnet, wobei im vorliegenden Ausführungsbeispiel die Mittellinie des Ansatzstücks 45 und die Achse 35 übereinstimmen. Am Ansatzstück 45 sind beispielsweise ein Eingußkanal 47 sowie Kerne 49 zum Ausbilden von nichtrotationssymmetrischen Formpartien vorgesehen. Über den Eingußkanal 47 wird die Formmasse in den Formhohlraum 40 eingespritzt. Mit den Kernen 49 wird eine Öffnung 51 für eine Welle des Flügelrads 10 und beispielsweise eine weitere Öffnung 52 in das Flügelrad 10 eingeformt (Figuren 4 und 5).

Zur Herstellung des Flügelrads 10 wird zunächst das Spritzgußwerkzeug 30 in einen geschlossenen Zustand gemäß Figur 3 gebracht. In dem geschlossenen Zustand wird über den Eingußkanal 47 die Formmasse in den Formhohlraum 40 eingespritzt. Nach Aushärten der Formmasse wird gemäß Figur 4 zunächst das dritte Werkzeugteil 33 axial entlang der Achse 35 aus dem zweiten Werkzeugteil 32 herausbewegt, wodurch die Kerne 49 aus dem Formhohlraum 40 gezogen und die Öffnungen 51 und 52 entformt werden. Durch die axiale Bewegung des Werkzeugteils 33 wird zugleich der mit dem Eingußkanal 47 entstehende Anguß vom Flügelrad 10 abgetrennt.

Danach wird beispielsweise das zweite Werkzeugteil 32 gemäß Figur 5 in der mit dem Pfeil 55 angegebenen Richtungen entlang der Achse 35 zurückgefahren. Beim Zurückfahren des Werkzeugteils 32 werden die Formkerne, die die Zwischenräume 19 des Flügelrads 10 ausbilden, aus den Zwischenräumen 19 gezogen. Da die Zwischenräume 19 aufgrund der schrägen Ausbildung der Flügel 18 schräg zur Achse 35 verlaufen, wird durch das Herausziehen der Formkerne eine Drehbewegung auf das Flügelrad 10 induziert, wodurch das Flügelrad 10 aus dem Werkzeugteil 31 mittels einer Schraubbewegung entformt wird. Es ist jedoch auch möglich das erste Werkzeugteil 31 oder beide Werkzeugteile 31, 32 zusammen axial zu bewegen.

Die erfindungsgemäße Vorrichtung ist nicht auf die Herstellung der beschriebenen Flügelräder 10 beschränkt. Sie läßt sich auch zur Herstellung anderer Formteile verwenden, die über schräg zur Achse 35 verlaufende und gegenläufig bezüglich der Formteiltrennebene ausgebildete Formpartien verfügen.

## Patentansprüche

1. Vorrichtung zum Spritzgießen eines Flügelrades, insbesondere eines Flügelrades einer Strömungspumpe, welches an den beiden Stirnflächen in Umfangsrichtung schräg zu einer Drehachse angeordnete Hohlräume besitzt, mit einem Spritzgußwerkzeug, das Formkerne zur Ausbildung der Hohlräume aufweist und aus mindestens zwei Werkzeugteilen besteht, wobei zumindest zwischen zwei Werkzeugteilen eine Formteiltrennebene zum Öffnen des Spritzgußwerkzeugs vorgesehen ist und wobei die Hohlräume bezüglich der Formteiltrennebene gegenläufig gerichtet sind, und die Formkerne starr mit den Werkzeugteilen (31, 32) verbunden sind, daß zum Öffnen des Spritzgußwerkzeugs (30) zumindest eines der beiden Werkzeugteile (31, 32) in Richtung einer mit der Drehachse (11) des Formteils (10) übereinstimmenden Achse (35) bewegbar ist, so daß durch die axiale Bewegung beim Herausziehen der Formkerne aus den Hohlräumen (19) eine Drehbewegung auf das Formteil (10) induziert wird, welche das Formteil (10) aus den beiden Werkzeugteilen (31, 32) durch eine Schraubbewegung entformt, und daß zum zusätzlichen Einformen von nichtrotationssymmetrischen Formpartien in das Formteil (10) mindestens ein weiteres Werkzeugteil (33) vorgesehen ist, welches verschiebbar bezüglich eines der beiden Werkzeugteile (31, 32) ist.

2. Vorrichtung nach Anspruch 1, dadurch gekennzeichnet, daß das weitere Werkzeugteil (32) ein Ansatzstück (45) aufweist, welches in einer Durchführung (44) eines der beiden Werkzeugteile (31, 32) in Richtung der Achse (35) geführt ist.

3. Vorrichtung nach Anspruch 3, dadurch gekennzeichnet, daß das Ansatzstück (45) einen Eingußkanal (47) für die Formmasse aufweist.

4. Vorrichtung nach Anspruch 1, dadurch gekennzeichnet, daß die Hohlräume (19) des Formteils (10) symmetrisch in bezug zu einer senkrecht zur Drehachse (11) verlaufenden Symmetrieebene (20) angeordnet sind und daß die Symmetrieebene (20) des Fomteils (10) und die Formteiltrennebene (38) des Spritzgußwerkzeugs (30) übereinstimmen.

## Claims

1. Device for injection moulding an impeller, in particular an impeller of a flow pump, which impeller has cavities which are arranged on the two end faces obliquely in the circumferential direction relative to a rotation axis, having an injection mould which has mould cores for forming the cavities and comprises at least two mould parts, a moulded part parting surface for opening the injection mould being provided at least between two mould parts, and the cavities being aligned in opposite directions with reference to the moulded part parting surface, and the mould cores being rigidly connected to the mould parts (31, 32), characterized in that for the purpose of opening the injection mould (30) at least one of the two mould parts (31, 32) can be moved in the direction of an axis (35) coinciding with the rotation axis (11) of the moulded part (10) with the result that during extraction of the mould cores from the cavities (19) the axial movement causes the moulded part (10) to execute a rotary movement which demoulds the moulded part (10) from the two mould parts (31, 32) by means of a screwing movement, and in that at least one further mould part (33), which can be displaced with reference to one of the two mould parts (31, 32) is provided for additional moulding of moulded parts which are not rotationally symmetrical into the moulded part (10).

2. Device according to Claim 1, characterized in that the further mould part (33) has a projection (45) which is guided in the direction of the axis (35) in a duct (44) of one of the two mould parts (31, 32).

3. Device according to Claim 3, characterized in that the projection (45) has a pouring channel (47) for the moulding compound.

4. Device according to Claim 1, characterized in that the cavities (19) of the moulded part (10) are arranged symmetrically with reference to a plane of symmetry (20) running perpendicular to the rotation axis (11), and in that the plane of symmetry (20) of the moulded part (10) and the moulded part parting surface (38) of the injection mould (30) coincide.

## Revendications

1. Dispositif pour mouler par injection une roue à aubes, en particulier la roue à aubes d'une pompe d'écoulement, roue à aubes qui possède sur les deux côtés frontaux des cavités disposées de façon oblique par rapport à un axe de rotation dans le sens périphérique, dispositif comprenant un outil de moulage par injection qui présente des noyaux de moulage pour constituer les cavités, et qui consiste en au moins deux parties d'outil, un plan de joint de pièce moulée étant prévu au moins entre les deux parties d'outil pour ouvrir l'outil de moulage par injection, et les cavités étant orientées en sens contraire par référence au plan de joint de la pièce moulée, et les noyaux de moulage étant reliés rigidement aux parties (31, 32) de l'outil,
• pour ouvrir l'outil de moulage par injection (30) au moins l'une des deux parties de l'outil (31, 32) peut se déplacer dans la direction d'un axe (35) qui coïncide avec l'axe de rotation (11) de la pièce moulée (10), de telle sorte que l'on induise par le mouvement axial, lors de l'extraction des noyaux de moulage hors des cavités (19) un mouvement de rotation sur la pièce moulée (10) qui démoule la pièce moulée (10) à partir des deux pièces de l'outil (31, 32) par un mouvement de vissage, et
• pour démouler en plus des parties de la pièce moulée (10) non symétriques de révolution il est prévu au moins une autre pièce d'outil (33) qui peut coulisser par rapport à l'une des deux parties de l'outil (31, 32).

2. Dispositif selon la revendication 1,
caractérisé en ce que
l'autre pièce d'outil (32) présente un embout (45) qui est guidée dans un passage (44) de l'une des deux pièces d'outil (31, 32) dans le sens de l'axe (35).

3. Dispositif selon la revendication 2,
caractérisé en ce que
l'embout (45) présente un canal de coulée (47) pour la masse de moulage.

4. Dispositif selon la revendication 1,
caractérisé en ce que
• les cavités (19) de la pièce moulée (10) sont disposées de façon symétrique par rapport à un plan de symétrie (20) qui s'étend perpendiculairement à l'axe de rotation (11) et
• le plan de symétrie (20) de la pièce moulée 10) et le plan de joint (38) de l'outil de moulage par injection (30) coïncident.
